(19) Europäisches Patentamt
European Patent Office
Office européen des brevets

(11) EP 4 190 850 A1

(12) EUROPEAN PATENT APPLICATION
published in accordance with Art. 153(4) EPC

(43) Date of publication:
07.06.2023 Bulletin 2023/23

(21) Application number: 21850554.3

(22) Date of filing: 29.07.2021

(51) International Patent Classification (IPC):
*C08K 5/098* (2006.01) *C08K 5/527* (2006.01)
*C08L 23/00* (2006.01) *C08L 23/12* (2006.01)
*C08K 3/26* (2006.01) *C08K 3/34* (2006.01)

(52) Cooperative Patent Classification (CPC):
C08K 3/26; C08K 3/34; C08K 5/098; C08K 5/527; C08L 23/00; C08L 23/12

(86) International application number:
PCT/JP2021/028114

(87) International publication number:
WO 2022/025187 (03.02.2022 Gazette 2022/05)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 31.07.2020 JP 2020130996

(71) Applicant: ADEKA CORPORATION
Arakawa-ku
Tokyo
116-8554 (JP)

(72) Inventors:
- HATTORI Yuhei
Saitama-shi, Saitama 336-0022 (JP)
- FUKUDA Takuya
Saitama-shi, Saitama 336-0022 (JP)
- SATO Akitomo
Saitama-shi, Saitama 336-0022 (JP)

(74) Representative: Gill Jennings & Every LLP
The Broadgate Tower
20 Primrose Street
London EC2A 2ES (GB)

# (54) ADDITIVE COMPOSITION, RESIN COMPOSITION, METHOD FOR PRODUCING RESIN COMPOSITION, AND MOLDED ARTICLE

(57) According to an additive composition which contains: (A) an aromatic phosphate sodium salt represented by the following Formula (1), where $R^1$ to $R^5$ each independently represent a hydrogen atom or an alkyl group having 1 to 6 carbon atoms; (B) a fatty acid sodium salt; and (C) talc, and in which a mass ratio (B)/(A) of the content of the component (B) with respect to the content of the component (A) is 0.1 to 3 and a mass ratio (C)/[(A) + (B) + (C)] of the content of the component (C) with respect to a total content of the components (A), (B), and (C) is 0.2 to 0.8, for example, an additive composition which has excellent powder flowability and can impart excellent mechanical properties and excellent color tone to a molded article can be provided.

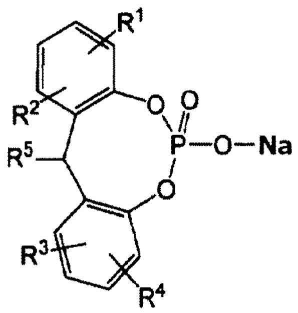

(1)

EP 4 190 850 A1

## Description

TECHNICAL FIELD

The present invention relates to an additive composition that has excellent powder flowability and can impart excellent mechanical properties and excellent color tone to a molded article, a resin composition, a method of producing a resin composition, and a molded article.

BACKGROUND ART

Polyolefin-based resins are advantageous in their excellent moldability, heat resistance, mechanical properties, low specific gravity, and the like; therefore, they are widely used in general miscellaneous goods, medical equipment, food packaging materials, automotive materials, and the like.
It is known that crystallization of a polyolefin-based resin during a molding process can be controlled by adding a nucleating agent to the polyolefin-based resin. As an additive composition containing a nucleating agent for a polyolefin-based resin, for example, the below-described Patent Document 1 proposes an additive composition that contains an aromatic phosphate compound and a fatty acid sodium salt.

RELATED ART DOCUMENT

PATENT DOCUMENT

[Patent Document 1] WO2017/150662

SUMMARY OF THE INVENTION

PROBLEMS TO BE SOLVED BY THE INVENTION

However, the additive composition disclosed in the above-described Patent Document 1 has room for further improvement in terms of sufficiently improving the color tone of a molded article.
An object of the present invention is to provide an additive composition that has excellent powder flowability and can impart excellent mechanical properties and excellent color tone to a molded article, a resin composition, a method of producing a resin composition, and a molded article.

MEANS FOR SOLVING THE PROBLEMS

The present inventors intensively studied to solve the above-described problem and consequently discovered that the problem can be solved by an additive composition which contains an aromatic phosphate sodium salt having a specific structure, a fatty acid sodium salt, and talc, and in which the content ratio of these components is in a specific range, thereby completing the present invention.
That is, the present invention provides an additive composition containing: (A) an aromatic phosphate sodium salt represented by the following Formula (1); (B) a fatty acid sodium salt; and (C) talc, wherein a mass ratio (B)/(A) of the content of the component (B) with respect to the content of the component (A) is 0.1 to 3, and a mass ratio (C)/[(A) + (B) + (C)] of the content of the component (C) with respect to a total content of the components (A), (B), and (C) is 0.2 to 0.8:

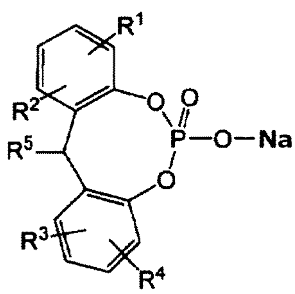

(1)

where $R^1$ to $R^5$ each independently represent a hydrogen atom or an alkyl group having 1 to 6 carbon atoms.

In the additive composition of the present invention, it is preferred that $R^1$ to $R^4$ be *t*-butyl groups and $R^5$ be a hydrogen atom, and that the (B) fatty acid sodium salt be a fatty acid sodium salt having 12 to 30 carbon atoms. The additive composition of the present invention preferably further contains (D) a hydrotalcite, and a mass ratio (D)/[(A) + (B) + (C)] of the content of the component (D) with respect to a total content of the components (A), (B), and (C) is preferably 0.01 to 20.
The resin composition of the present invention is a resin composition containing a polyolefin-based resin and the above-described additive composition.
Further, another resin composition of the present invention may be a resin composition containing: a polyolefin-based resin; (A) an aromatic phosphate sodium salt represented by the following Formula (1); (B) a fatty acid sodium salt; and (C) talc, wherein a mass ratio (B)/(A) of the content of the component (B) with respect to the content of the component (A) is 0.1 to 3, and a mass ratio (C)/[(A) + (B) + (C)] of the content of the component (C) with respect to a total content of the components (A), (B), and (C) is 0.2 to 0.8. This resin composition preferably further contains (D) a hydrotalcite, and a mass ratio (D)/[(A) + (B) + (C)] of the content of the component (D) with respect to a total content of the components (A), (B), and (C) is preferably 0.01 to 20.

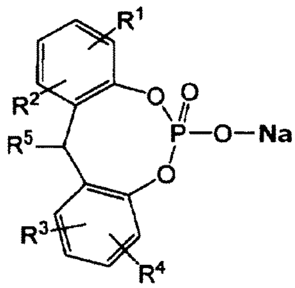

(1)

where $R^1$ to $R^5$ each independently represent a hydrogen atom or an alkyl group having 1 to 6 carbon atoms.
In the resin composition of the present invention, the polyolefin-based resin is preferably a polypropylene-based resin.
Still further, the present invention provides a method of producing a resin composition, including the step of blending the above-described additive composition into a polyolefin-based resin.
Moreover, the present invention provides a molded article obtained by molding the above-described resin composition.

EFFECTS OF THE INVENTION

According to the present invention, the followings are provided: an additive composition that has excellent powder flowability and can impart excellent mechanical properties and excellent color tone to a molded article; a resin composition; a method of producing a resin composition; and a molded article.

MODE FOR CARRYING OUT THE INVENTION

Embodiments of the present invention will now be described in detail.
First, the additive composition will be described.

<Additive Composition>

The additive composition according to the present embodiment contains: (A) an aromatic phosphate sodium salt represented by the following Formula (1); (B) a fatty acid sodium salt; and (C) talc:

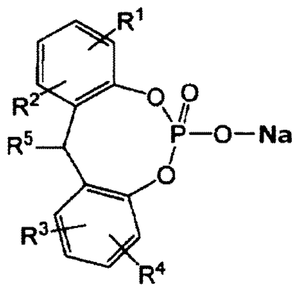

(1)

where $R^1$ to $R^5$ each independently represent a hydrogen atom or an alkyl group having 1 to 6 carbon atoms.

A mass ratio (B)/(A) of the content of the component (B) with respect to the content of the component (A) is 0.1 to 3, and a mass ratio (C)/[(A) + (B) + (C)] of the content of the component (C) with respect to a total content of the components (A), (B), and (C) is 0.2 to 0.8.

The additive composition according to the present embodiment has excellent powder flowability and can impart excellent mechanical properties and excellent color tone to a molded article.

In Formula (1), examples of the alkyl group having 1 to 6 carbon atoms that is represented by $R^1$ to $R^5$ include a methyl group, an ethyl group, an *n*-propyl group, an isopropyl group, a cyclopropyl group, an *n*-butyl group, a *see*-butyl group, a *tert*-butyl group, an isobutyl group, a cyclobutyl group, an *n*-amyl group, a *tert*-amyl group, a cyclopentyl group, an *n*-hexyl group, and a cyclohexyl group. From the standpoint of imparting superior mechanical properties to a molded article, $R^1$ to $R^4$ are particularly preferably *tert*-butyl groups. Further, from the same standpoint, $R^5$ is preferably a hydrogen atom or a methyl group, particularly preferably a hydrogen atom. The (A) aromatic phosphate sodium salt may be contained singly or two or more thereof may be contained in combination.

Specific examples of the (A) aromatic phosphate sodium salt include sodium 2,2'-methylene-bis(4,6-dimethylphenyl)phosphate, sodium 2,2'-ethylidene-bis(4,6-dimethylphenyl)phosphate, sodium 2,2'-methylene-bis(4,6-diisopropylphenyl)phosphate, sodium 2,2'-ethylidene-bis(4,6-diisopropylphenyl)phosphate, sodium 2,2'-methylene-bis(4,6-di-tert-butylphenyl)phosphate, sodium 2,2'-ethylidene-bis(4,6-di-tert-butylphenyl)phosphate, sodium 2,2'-methylene-bis(4,6-di-*tert*-amylphenyl)phosphate, and sodium 2,2'-ethylidene-bis(4,6-di-*tert*-amylphenyl)phosphate; however, the (A) aromatic phosphate sodium salt is not limited to any of these compounds.

From the standpoint of obtaining favorable dispersibility in a resin, the (A) aromatic phosphate sodium salt has a volume-average particle size of preferably 20 μm or less, more preferably 10 μm or less. The volume-average particle size of the (A) aromatic phosphate sodium salt may be, for example, not less than 0.5 μm.

The (B) fatty acid sodium salt may be contained singly or two or more thereof may be contained in combination. From the standpoint of imparting superior mechanical properties to a molded article, the (B) fatty acid sodium salt is preferably a fatty acid sodium salt having 12 to 30 carbon atoms. From the standpoint of imparting superior mechanical properties to a molded article, the number of carbon atoms of the (B) fatty acid sodium salt is more preferably not less than 14, still more preferably not less than 16. Further, from the same standpoint, the number of carbon atoms of the (B) fatty acid sodium salt is more preferably 28 or less, still more preferably 26 or less, yet still more preferably 22 or less, particularly preferably 20 or less. Moreover, from the same standpoint, the (B) fatty acid sodium salt is preferably a saturated fatty acid sodium salt.

Specific examples of the (B) fatty acid sodium salt include, but not limited to: sodium salts of saturated fatty acids such as capric acid, 2-ethylhexanoic acid, undecylic acid, lauric acid, tridecylic acid, myristic acid, pentadecylic acid, palmitic acid, margaric acid, stearic acid, 12-hydroxystearic acid, nonadecylic acid, arachidic acid, heneicosylic acid, behenic acid, tricosylic acid, lignoceric acid, cerotic acid, montanoic acid, and melissic acid; and sodium salts of unsaturated fatty acids such as 4-decenoic acid, 4-dodecenoic acid, palmitoleic acid, α-linolenic acid, linoleic acid, γ-linolenic acid, stearidonic acid, petroselinic acid, oleic acid, ricinoleic acid, elaidic acid, vaccenic acid, eicosapentaenoic acid, docosapentaenoic acid, and docosahexaenoic acid. Thereamong, a sodium salt of lauric acid, tridecylic acid, myristic acid, pentadecylic acid, palmitic acid, margaric acid, stearic acid, 12-hydroxystearic acid, nonadecylic acid, arachidic acid, heneicosylic acid, behenic acid, tricosylic acid, lignoceric acid, cerotic acid, montanoic acid, or melissic acid, or a sodium salt of 4-decenoic acid, palmitoleic acid, α-linolenic acid, linoleic acid, γ-linolenic acid, stearidonic acid, petroselinic acid, oleic acid, ricinoleic acid, elaidic acid, vaccenic acid, eicosapentaenoic acid, docosapentaenoic acid, or docosahexaenoic acid is preferred; a sodium salt of myristic acid, palmitic acid, stearic acid, 12-hydroxystearic acid, arachidic acid, behenic acid, palmitoleic acid, α-linolenic acid, linoleic acid, γ-linolenic acid, oleic acid, or ricinoleic acid is more preferred; a sodium salt of myristic acid, palmitic acid, stearic acid, 12-hydroxystearic acid, arachidic acid, or behenic acid is still more preferred; a sodium salt of myristic acid, palmitic acid, stearic acid, 12-hydroxystearic acid, or arachidic acid is yet still more preferred; and a sodium salt of myristic acid, stearic acid, or 12-hydroxystearic acid is particularly preferred.

The particle shape of the (C) talc is not particularly limited; however, from the standpoint of obtaining an additive composition that has superior powder flowability and can impart superior mechanical properties to a molded article, the (C) talc particularly preferably has a tabular shape. The average particle size of the talc is also not particularly limited and may be, for example, 1 to 100 μm. From the standpoint of obtaining favorable dispersibility in a polyolefin-based resin, the average particle size of the talc is preferably 30 μm or less, more preferably 20 μm or less, still more preferably 10 μm or less. The "average particle size" of the talc refers to an arithmetic mean particle size calculated by the method according to JIS Z8819-2 based on a particle size distribution measured by the laser diffractometry according to JIS Z8825. Further, the surface of the talc may be untreated, or the talc may be surface-treated with a surfactant or the like for the purpose of improving the dispersibility in a resin. Examples of the surfactant used for a surface treatment of the talc include silane coupling agents, titanium coupling agents, fatty acids, fatty acid esters, fatty acid amides, and fatty acid metal salts.

As described above, the mass ratio (B)/(A) of the content (parts by mass) of the component (B) with respect to the content (parts by mass) of the component (A) is 0.1 to 3, and the mass ratio (C)/[(A) + (B) + (C)] of the content (parts by mass) of the component (C) with respect to a total content (parts by mass) of the components (A), (B), and (C) is 0.2 to 0.8. When the value of (B)/(A) or the value of (C)/[(A) + (B) + (C)] is outside the above-described range, the additive composition does not have sufficiently good powder flowability, or a molded article having sufficiently good mechanical properties and color tone cannot be obtained. From the standpoint of further improving the powder flowability of the additive composition, the value of (B)/(A) is preferably not less than 0.14, more preferably not less than 0.33, still more preferably not less than 0.6. Further, from the standpoint of obtaining a molded article having superior mechanical properties, the value of (B)/(A) is preferably 2 or less, more preferably 1 or less. Still further, from the standpoint of obtaining a molded article having superior color tone, the value of (C)/[(A) + (B) + (C)] is preferably not less than 0.3, more preferably not less than 0.5. Moreover, from the standpoint of obtaining a molded article having superior mechanical properties, the value of (C)/[(A) + (B) + (C)] is preferably 0.7 or less.

The additive composition according to the present embodiment preferably further contains (D) a hydrotalcite. In this case, the additive composition has excellent heat resistance. Further, in this case, a molded article having superior mechanical properties and excellent heat resistance can be obtained.

The (D) hydrotalcite is a complex salt compound that is known as a natural or synthetic product and composed of magnesium, aluminum, hydroxy groups, a carbonate group and arbitrary crystal water, and examples thereof include hydrotalcites in which some of the magnesium or aluminum atoms are substituted with other metals such as an alkali metal or zinc; and hydrotalcites in which the hydroxy group(s) and/or carbonate group is/are substituted with other anionic groups. In these hydrotalcites, the crystal water may be dehydrated, and the hydrotalcites may be coated with, for example, a higher fatty acid such as stearic acid, a higher fatty acid metal salt such as alkali metal oleate, a metal organic sulfonate such as alkali metal dodecylbenzenesulfonate, a higher fatty acid amide, a higher fatty acid ester, or a wax. The hydrotalcites may be naturally-occurring or synthetic hydrotalcites. Examples of a method of producing thereof include known methods that are described in JPS46-2280B1, JPS50-30039B1, JPS51-29129B1, JPH03-36839B2, JPS61-174270A, JPH05-179052A, and the like. Further, the hydrotalcites can be used without any restriction in terms of their crystal structures, crystal particles, and the like.

When the additive composition according to the present embodiment contains the (D) hydrotalcite, a mass ratio (D)/[(A) + (B) + (C)] of the content (parts by mass) of the component (D) with respect to a total content (parts by mass) of the components (A), (B), and (C) may be, for example, 0.01 to 20. From the standpoint of further improving the heat resistance of the additive composition, the value of (D)/[(A) + (B) + (C)] is preferably not less than 0.05, more preferably not less than 0.1, still more preferably not less than 0.3, yet still more preferably not less than 0.5. Further, from the standpoint of obtaining a molded article having superior mechanical properties and color tone, the value of (D)/[(A) + (B) + (C)] is preferably 10 or less, more preferably 5 or less, still more preferably 3 or less, yet still more preferably 2 or less, particularly preferably 1.5 or less.

The additive composition according to the present embodiment may further contain, as required, various additives such as a nucleating agent other than the aromatic phosphate sodium salt, a phenolic antioxidant, a phosphorus-based antioxidant, a sulfur-based antioxidant, other antioxidants, a hindered amine compound, an ultraviolet absorber, a fatty acid metal salt other than the fatty acid sodium salt, a flame retardant, a flame retardant aid, a lubricant, a filler other than talc, an antistatic agent, a fluorescent brightener, a pigment, and a dye.

Examples of the nucleating agent other than the aromatic phosphate sodium salt include: aromatic phosphate lithium salts, such as lithium 2,2'-methylene-bis(4,6-dimethylphenyl)phosphate, lithium 2,2'-ethylidene-bis(4,6-dimethylphenyl)phosphate, lithium 2,2'-methylene-bis(4,6-diisopropylphenyl)phosphate, lithium 2,2'-ethylidene-bis(4,6-diisopropylphenyl)phosphate, lithium 2,2'-methylene-bis(4,6-di-*tert*-butylphenyl)phosphate, lithium 2,2'-ethylidene-bis(4,6-di-*tert*-butylphenyl)phosphate, lithium 2,2'-methylene-bis(4,6-di-*tert*-amylphenyl)phosphate, and lithium 2,2'-ethylidene-bis(4,6-di-*tert*-amylphenyl)phosphate; aromatic phosphate dihydroxyaluminum salts, such as dihydroxyaluminum 2,2'-methylene-bis(4,6-dimethylphenyl)phosphate, dihydroxyaluminum 2,2'-ethylidene-bis(4,6-dimethylphenyl)phosphate, dihydroxyaluminum 2,2'-methylene-bis(4,6-diisopropylphenyl)phosphate, dihydroxyaluminum 2,2'-ethylidene-bis(4,6-diisopropylphenyl)phosphate, dihydroxyaluminum 2,2'-methylene-bis(4,6-di-*tert*-butylphenyl)phosphate, dihydroxyaluminum 2,2'-ethylidene-bis(4,6-di-*tert*-butylphenyl)phosphate, dihydroxyaluminum 2,2'-methylene-bis(4,6-di-*tert*-amylphenyl)phosphate, and dihydroxyaluminum 2,2'-ethylidene-bis(4,6-di-*tert*-amylphenyl)phosphate; aromatic phosphate hydroxyaluminum salts, such as hydroxyaluminum bis[2,2'-methylene-bis(4,6-dimethylphenyl)phosphate], hydroxyaluminum bis[2,2'-ethylidene-bis(4,6-dimethylphenyl)phosphate], hydroxyaluminum bis[2,2'-methylene-bis(4,6-diisopropylphenyl)phosphate], hydroxy aluminum bis[2,2'-ethylidene-bis(4,6-diisopropylphenyl)phosphate], hydroxyaluminum bis[2,2'-methylene-bis(4,6-di-*tert*-butylphenyl)phosphate], hydroxyaluminum bis[2,2'-ethylidene-bis(4,6-di-*tert*-butylphenyl)phosphate], hydroxyaluminum bis[2,2'-methylene-bis(4,6-di-*tert*-amylphenyl)phosphate], and hydroxyaluminum bis[2,2'-ethylidene-bis(4,6-di-*tert*-amylphenyl)phosphate]; metal carboxylates, such as sodium benzoate, 4-*tert*-butylbenzoate aluminum salt, sodium adipate, 2-sodium-bicyclo[2.2.1]heptane-2,3-dicarboxylate, and calcium cyclohexane-1,2-dicarboxylate; polyol derivatives, such as dibenzylidene sorbitol, bis(methylbenzylidene)sorbitol, bis(3,4-dimethylbenzylidene)sorbitol, bis(*p*-ethylbenzylidene)sorbitol, bis(dimethylbenzylidene)sorbitol, and 1,2,3-trideoxy-4,6:5,7-*o*-bis(4-propylbenzylidene)nonitol; and amide compounds, such as *N*,*N*',*N*'-tris[2-methylcyclohexyl]-1,2,3-propane tricarboxamide, *N*,*N*',*N*"-tricyclohexyl-1,3,5-benzene tricarboxamide, *N*,*N*'-dicyclohexylnaphthalene dicarboxamide, and 1,3,5-tri(dimethylisopropoylamino)benzene.

Examples of the phenolic antioxidant include 2,6-di-*tert*-butyl-4-ethylphenol, *2-tert*-butyl-4,6-dimethylphenol, styrenated phenol, 2,2'-methylene-bis(4-ethyl-6-*tert*-butylphenol), 2,2'-thiobis-(6-*tert*-butyl-4-methylphenol), 2,2'-thiodiethylene-bis[3-(3,5-di-*tert*-butyl-4-hydroxyphenyl)propionate], 2-methyl-4,6-bis(octylsulfanylmethyl)phenol, 2,2'-isobutylidene-bis(4,6-dimethylphenol), isooctyl-3-(3,5-di-*tert*-butyl-4-hydroxyphenyl)propionate, *N*,*N*'-hexane-1,6-diyl-bis[3-(3,5-di-*tert*-butyl-4-hydroxyphenyl)propionamide], 2,2'-oxamide-bis[ethyl-3-(3,5-di-*tert*-butyl-4-hydroxyphenyl)propionate], 2-ethylhexyl-3-(3',5'-di-*tert*-butyl-4'-hydroxyphenyl)propionate, 2,2'-ethylene-bis(4,6-di-*tert*-butylphenol), esters of 3,5-di-*tert*-butyl-4-hydroxybenzene propanoic acid and a C13-15 alkyl, *2,5-di-tert*-amylhydroquinone, hindered phenol polymers (e.g., trade name "AO.OH.98" manufactured by ADEKA Polymer Additives Europe SAS), 2,2'-methylene-bis[6-(1-methylcyclohexyl)-*p*-cresol], 2-*tert*-butyl-6-(3-*tert*-butyl-2-hydroxy-5-methylbenzyl)-4-methylphenyl acrylate, 2-[1-(2-hydroxy-3,5-di-*tert*-pentylphenyl)ethyl]-4,6-di-*tert*-pentylphenyl acrylate, 6-[3-(3-*tert*-butyl-4-hydroxy-5-methyl)propoxy]-2,4,8,10-tetra-tert-butylbenzo[*d*,*f*][1,3,2]-dioxaphosphepin, hexamethylene-bis[3-(3,5-di-*tert*-butyl-4-hydroxyphenyl)propionate], calcium bis[monoethyl(3,5-di-*tert*-butyl-4-hydroxybenzyl)phosphonate], a reaction product between 5,7-bis(1,1-dimethylethyl)-3-hydroxy-2(3*H*-benzofuranone and *o*-xylene, 2,6-di-*tert*-butyl-4-(4,6-bis(octylthio)-1,3,5-triazine-2-ylamino)phenol, DL-a-tocophenol (vitamin E), 2,6-bis($\alpha$-methylbenzyl)-4-methylphenol, bis[3,3-bis-(4'-hydroxy-3'-*tert*-butylphenyl)butyric acid]glycol ester, 2,6-di-*tert*-butyl-*p*-cresol, 2,6-diphenyl-4-octadecyloxyphenol, stearyl(3,5-di-*tert*-butyl-4-hydroxyphenyl)propionate, distearyl(3,5-di-*tert*-butyl-4-hydroxybenzyl)phosphonate, tridecyl-3,5-*tert*-butyl-4-hydroxybenzyl thioacetate, thiodiethylene-bis[(3,5-di-*tert*-butyl-4-hydroxyphenyl)propionate], 4,4'-thiobis(6-*tert*-butyl-*m*-cresol), 2-octylthio-4,6-di(3,5-di-*tert*-butyl-4-hydroxyphenoxy)-s-triazine, 2,2'-methylene-bis(4-methyl-6-*tert*-butylphenol), bis[3,3-bis(4-hydroxy-3-*tert*-butylphenyl)butyric acid]glycol ester, 4,4'-butylidene-bis(2,6-di-*tert*-butylphenol), 4,4'-butylidene-bis(6-*tert*-butyl-3-methylphenol), 2,2'-ethylidene-bis(4,6-di-*tert*-butylphenol), 1,1,3-tris(2-methyl-4-hydroxy-5-*tert*-butylphenyl)butane, bis[2-*tert*-butyl-4-methyl-6-(2-hydroxy-3-tert-butyl-5-methylbenzyl)phenyl]terephthalate, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3',5'-*tert*-butyl-4'-hydroxyphenyl)propionate]methane, 2-*tert*-butyl-4-methyl-6-(2-acryloyloxy-3-*tert*-butyl-5-methylbenzyl)phenol, 3,9-bis[2-(3-*tert*-butyl-4-hydroxy-5-methylhydrocinnamoyloxy)-1,1-dimethylethyl]-2,4,8,10-tetraoxaspiro[5.5]undecane, triethylene glycol-bis[$\beta$-(3-*tert*-butyl-4-hydroxy-5-methylphenyl)propionate], and 3-(3,5-dialkyl-4-hydroxyphenyl)propionic acid derivatives, such as stearyl-3-(3,5-di-*tert*-butyl-4-hydroxyphenyl)propionic acid amide, palmityl-3-(3,5-di-*tert*-butyl-4-hydroxyphenyl)propionic acid amide, myristyl-3-(3,5-di-*tert*-butyl-4-hydroxyphenyl)propionic acid amide, and lauryl-3-(3,5-di-*tert*-butyl-4-hydroxyphenyl)propionic acid amide.

Examples of the phosphorus-based antioxidant include triphenyl phosphite, diisooctyl phosphite, heptakis(dipropylene glycol) triphosphite, triisodecyl phosphite, diphenyl isooctyl phosphite, diisooctyl phenyl phosphite, diphenyl tridecyl phosphite, triisooctyl phosphite, trilauryl phosphite, diphenyl phosphite, tris(dipropylene glycol) phosphite, dioleyl hydrogen phosphite, trilauryl trithiophosphite, bis(tridecyl) phosphite, tris(isodecyl) phosphite, tris(tridecyl) phosphite, diphenyl decyl phosphite, dinonyl phenyl-bis(nonylphenyl) phosphite, poly(dipropylene glycol)phenyl phosphite, tetraphenyl dipropylene glycol diphosphite, trisnonyl phenyl phosphite, tris(2,4-di-*tert*-butylphenyl) phosphite, tris(2,4-di-*tert*-butyl-5-methylphenyl) phosphite, tris[2-*tert*-butyl-4-(3-*tert*-butyl-4-hydroxy-5-methylphenylthio)-5-methylphenyl]phosphite, tri(decyl) phosphite, octyl diphenyl phosphite, di(decyl)monophenyl phosphite, mixtures of distearyl pentaerythritol and calcium stearate, alkyl(C10) bisphenol-A phosphite, tetraphenyl-tetra(tridecyl)pentaerythritol tetraphosphite, bis(2,4-di-*tert*-butyl-6-methylphenyl)ethyl phosphite, tetra(tridecyl)isopropylidene diphenol diphosphite, tetra(tridecyl)-4,4'-*n*-butylidene-bis(2-*tert*-butyl-5-methylphenol) diphosphite, hexa(tridecyl)-1,1,3-tris(2-methyl-4-hydroxy-5-*tert*-butylphenyl)butane triphosphite, tetrakis(2,4-di-*tert*-butylphenyl)biphenylene diphosphonite, 9,10-dihydro-9-oxa-10-phosphaphenanthrene-10-oxide, (1-methyl-1-propenyl-3-ylidene)tris(1,1-dimethylethyl)-5-methyl-4,1-phenylene)hexatridecyl phosphite, 2,2'-methylene-bis(4,6-di-*tert*-butylphenyl)-2-ethylhexyl phosphite, 2,2'-methylene-bis(4,6-di-*tert*-butylphenyl)-octadecyl phosphite, 2,2'-ethylidene-bis(4,6-di-*tert*-butylphenyl) fluorophosphite, 4,4'-butylidene-bis(3-methyl-6-*tert*-butylphenylditridecyl) phosphite, tris(2-[(2,4,8,10-tetrakis-*tert*-butyldibenzo[*d*,*f*][1,3,2]dioxaphosphepin-6-yl)oxy]ethyl)amine, 3,9-bis(4-nonylphenoxy)-2,4,8,10-tetraoxa-3,9-diphosphaspiro[5,5]undecane, 2,4,6-tri-*tert*-butylphenyl-2-butyl-2-ethyl-1,3-propanediol phosphite, poly-4,4'-isopropylidene diphenol C12-15 alcohol phosphite, bis(diisodecyl)pentaerythritol diphosphite, bis(tridecyl)pentaerythritol diphosphite, bis(octadecyl)pentaerythritol diphosphite, bis(nonylphenyl)pentaerythritol diphosphite, bis(2,4-di-*tert*-butylphenyl)pentaerythritol diphosphite, bis(2,4,6-tri-*tert*-butylphenyl)pentaerythritol diphosphite, bis(2,6-di-*tert*-butyl-4-methylphenyl)pentaerythritol diphosphite, and bis(2,4-dicumylphenyl)pentaerythritol diphosphite.

Examples of the sulfur-based antioxidant include tetrakis[methylene-3-(laurylthio)propionate]methane, bis(methyl-4-[3-*n*-alkyl(C12/C14)thiopropionyloxy]-5-tert-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-*tert*-butyl-*m*-cresol), 2,2'-thiobis(6-*tert*-butyl-*p*-cresol), distearyl disulfide.

Examples of the other antioxidants include: nitrone compounds, such as *N*-benzyl-$\alpha$-phenyl nitrone, *N*-ethyl-$\alpha$-methyl nitrone, *N*-octyl-$\alpha$-heptyl nitrone, *N*-lauryl-$\alpha$-undecyl nitrone, *N*-tetradecyl-$\alpha$-tridecyl nitrone, *N*-hexadecyl-$\alpha$-pentadecyl nitrone, *N*-octyl-$\alpha$-heptadecyl nitrone, *N*-hexadecyl-$\alpha$-heptadecyl nitrone, *N*-octadecyl-$\alpha$-pentadecyl nitrone, *N*-heptadecyl-$\alpha$-heptadecyl nitrone, and *N*-octadecyl-$\alpha$-heptadecyl nitrone; and benzofuran compounds, such as 3-arylbenzofuran-2(3*H*)-one, 3-(alkoxyphenyl)benzofuran-2-one, 3-(acyloxyphenyl)benzofuran-2(3*H*)-one, 5,7-di-*tert*-butyl-3-(3,4-dimethylphenyl)-benzofuran-2(3*H*)-one, 5,7-di-*tert*-butyl-3-(4-hydroxyphenyl)-benzofuran-2(3*H*)-one, 5,7-di-*tert*-butyl-3-{4-(2-hydroxyethoxy)phenyl}-benzofuran-2(3*H*)-one, 6-(2-(4-(5,7-di-*tert*-2-oxo-2,3-dihydrobenzofuran-3-yl)phenoxy)ethoxy)-6-oxohexyl-6-((6-hydroxyhexanoyl)oxy)hexanoate, and 5-di-*tert*-butyl-3-(4-((15-hydroxy-3,6,9,13-tetraoxapentadecyl)oxy)phenyl)benzofuran-2(3*H*)-one.

Examples of the hindered amine compound include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-di(tridecyl)-1,2,3,4-butanetetracarboxylate, bis(1,2,2,6,6-pentamethyl-4-piperidyl)·di(tridecyl)-1,2,3,4-butanetetracarboxylate, bis(1,2,2,4,4-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethyl succinate polycondensates, 1,6-bis(2,2,6,6-tetramethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-*tert*-octylamino-s-triazine polycondensates, 1,5,8,12-tetrakis[2,4-bis(*N*-butyl-*N*-(2,2,6,6-tetramethyl-4-piperidyl)amino)-*s*-triazine-6-yl]-1,5,8,12-tetraazadodecane, 1,5,8,12-tetrakis[2,4-bis(*N*-butyl-*N*-(1,2,2,6,6-pentamethyl-4-piperidyl)amino)-s-triazine-6-yl]-1,5,8,12-tetraazadodecane, 1,6,11-tris[2,4-bis(*N*-butyl-*N*-(2,2,6,6-tetramethyl-4-piperidyl)amino)-s-triazine-6-ylamino]undecane, 1,6,11-tris[2,4-bis(*N*-butyl-*N*-(1,2,2,6,6-pentamethyl-4-piperidyl)amino)-*s*-triazine-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, bis(1-undecyloxy-2,2,6,6-tetramethylpiperidin-4-yl)carbonate, 2,2,6,6-tetramethyl-4-piperidyl hexadecanoate, and 2,2,6,6-tetramethyl-4-piperidyl octadecanoate.

Examples of the ultraviolet absorber include; 2-hydroxybenzophenones, such as 2,4-dihydroxybenzophenone and 5,5'-methylene-bis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-*tert*-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3,5-dicumylphenyl)benzotriazole, 2,2'-methylene-bis(4-*tert*-octyl-6-benzotriazolyl phenol), polyethylene glycol esters of 2-(2-hydroxy-3-*tert*-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-*tert*-butylphenyl]benzotriazole, 2-[2-hydroxy-3-(2-methacryloyloxyethyl)-5-*tert*-octylphenyl]benzotriazole, 2-[2-hydroxy-3-(2-methacryloyloxyethyl)-5-*tert*-butylphenyl]-5-chlorobenzotriazole, 2-[2-hydroxy-5-(2-methacryloyloxyethyl)phenyl]benzotriazole, 2-[2-hydroxy-3-*tert*-butyl-5-(2-methacryloyloxyethyl)phenyl]benzotriazole, 2-[2-hydroxy-3-*tert*-amyl-5-(2-methacryloyloxyethyl)phenyl]benzotriazole, 2-[2-hydroxy-3-*tert*-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; benzoates, such as phenyl salicylate, resorcinol monobenzoate, 2,4-di-*tert*-butylphenyl-3,5-di-*tert*-butyl-4-hydroxybenzoate, octyl(3,5-di-*tert*-butyl-4-hydroxy)benzoate, dodecyl(3,5-di-*tert*-butyl-4-hydroxy)benzoate, tetradecyl(3,5-di-*tert*-butyl-4-hydroxy)benzoate, hexadecyl(3,5-di-*tert*-butyl-4-hydroxy)benzoate, octadecyl(3,5-di-*tert*-butyl-4-hydroxy)benzoate, and behenyl(3,5-di-*tert*-butyl-4-hydroxy)benzoate; substituted oxanilides, such as 2-ethyl-2'-ethoxyoxanilide and 2-ethoxy-4'-dodecyloxanilide; cyanoacrylates, such as ethyl-$\alpha$-cyano-$\beta,\beta$-diphenyl acrylate and methyl-2-cyano-3-methyl-3-(*p*-methoxyphenyl)acrylate; triazines, such as 2-(4,6-diphenyl-1,3,5-triazine-2-yl)-5-hexyloxyphenol, 2-(2-hydroxy-4-octoxyphenyl)-4,6-bis(2,4-dimethylphenyl)-1,3,5-triazine, trioctyl-2,2',2"-((1,3,5-triazine-2,4,6-triyl)tris(3-hydroxybenzene-4-,1-diyl)tripropionate), 2-(4,6-diphenyl-1,3,5-triazine-2-yl)-5-[2-(2-ethylhexanoyloxy)ethoxy]phenol, 2,4,6-tris(2-hydroxy-4-hexyloxy-3-methylphenyl)-1,3,5-triazine, and 1,12-bis[2-[4-(4,6-diphenyl-1,3,5-triazine-2-yl)-3-hydroxyphenoxy]ethyl]dodecane dioate; and a variety of metal salts and metal chelates, particularly salts and chelates of nickel and chromium.

Examples of the fatty acid metal salt other than the fatty acid sodium salt include metal salts of fatty acids having 12 to 30 carbon atoms that contain a linear or branched fatty acid residue. Examples of a metal ion constituting the fatty acid metal salt include a potassium ion, a lithium ion, a dihydroxyaluminum ion, a calcium ion, a zinc ion, a barium ion, a magnesium ion, and a hydroxyaluminum ion, among which a potassium ion, a lithium ion, or a calcium ion is particularly preferred.

Examples of the flame retardant include: aromatic phosphates, such as triphenyl phosphate, tricresyl phosphate, trixylenyl phosphate, cresyl diphenyl phosphate, cresyl-2,6-dixylenyl phosphate, resorcinol-bis(diphenyl phosphate), (1-methylethylidene)-4,1-phenylene tetraphenyl diphosphate, and 1,3-phenylene-tetrakis(2,6-dimethylphenyl)phosphate, as well as "ADK STAB FP-500", "ADK STAB FP-600" and "ADK STAB FP-800" (trade names, manufactured by ADEKA Corporation); phosphonates, such as divinyl phenylphosphonate, diallyl phenylphosphonate, and (1-butenyl) phenylphosphonate; phosphinates, such as phenyl diphenylphosphinate, methyl diphenylphosphinate, and 9,10-dihydro-9-oxa-10-phosphaphenanthlene-10-oxide derivatives; phosphazene compounds, such as bis(2-allylphenoxy)phosphazene and dicresyl phosphazene; phosphorus-based flame retardants, such as melamine phosphate, melamine pyrophosphate, melamine polyphosphate, melam polyphosphate, ammonium polyphosphate, piperazine phosphate, piperazine pyrophosphate, piperazine polyphosphate, phosphorus-containing vinylbenzyl compounds, and red phosphorus; metal hydroxides, such as magnesium hydroxide and aluminum hydroxide; and bromine-based flame retardants, such as brominated bisphenol A-type epoxy resins, brominated phenol novolac-type epoxy resins, hexabromobenzene, pentabromotoluene, ethylene-bis(pentabromophenyl), ethylene-bis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate, and brominated styrene. These flame retardants are preferably used in combination with a drip inhibitor such as a fluorocarbon resin, and/or a flame retardant aid such as a polyhydric alcohol or a hydrotalcite.

Examples of the lubricant include: unsaturated fatty acid amides, such as oleic acid amide and erucic acid amide; saturated fatty acid amides, such as behenic acid amide and stearic acid amide; butyl stearate; stearyl alcohol; stearic acid monoglyceride; sorbitan monopalmitate; sorbitan monostearate; mannitol; stearic acid; hardened castor oil; stearic acid amide; oleic acid amide; and ethylene-bis stearic acid amide.

Examples of the filler other than talc include mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, silica, alumina, potassium titanate whiskers, wollastonite, and fibrous magnesium oxysulfate, and any of these fillers can be used by appropriately selecting the particle size (the fiber diameter, the fiber length, and the aspect ratio in the case of a fibrous filler). Further, the filler to be used may be subjected to a surface treatment as required.

Examples of the antistatic agent include low-molecular-weight antistatic agents based on nonionic, anionic, cationic, or amphoteric surfactants, and high-molecular-weight antistatic agents based on polymer compounds. Examples of the nonionic surfactants include: polyethylene glycol-type nonionic surfactants, such as higher alcohol ethylene oxide adducts, fatty acid ethylene oxide adducts, higher alkylamine ethylene oxide adducts, and polyolefin glycol ethylene oxide adducts; and polyhydric alcohol-type nonionic surfactants, such as polyethylene oxides, glycerin fatty acid esters, pentaerythritol fatty acid esters, sorbitol or sorbitan fatty acid esters, polyhydric alcohol alkyl ethers, and alkanolamine aliphatic amides. Examples of the anionic surfactants include: carboxylates, such as alkali metal salts of higher fatty acids; sulfates, such as higher alcohol sulfates and higher alkyl ether sulfates; sulfonates, such as alkylbenzene sulfonates, alkyl sulfonates, and paraffin sulfonates; and phosphates such as higher alcohol phosphates. Examples of the cationic surfactants include quaternary ammonium salts, such as alkyltrimethyl ammonium salts. Examples of the amphoteric surfactants include: amino acid-type amphoteric surfactants, such as higher alkyl aminopropionates; and betaine-type amphoteric surfactants, such as higher alkyl dimethylbetaines and higher alkyl dihydroxyethylbetaines. Among these surfactants, an anionic surfactant is preferred, and a sulfonate such as an alkylbenzene sulfonate, an alkyl sulfonate, or a paraffin sulfonate is particularly preferred.

Examples of the high-molecular-weight antistatic agents include ionomers, and block polymers containing a polyethylene glycol as a hydrophilic moiety. Examples of the ionomers include the ionomer disclosed in JP2010-132927A. Examples of the polymers containing a polyethylene glycol as a hydrophilic moiety include the polyether ester amide disclosed in JPH07-10989A, the polymer disclosed in US6552131B1 which is composed of a polyolefin and a polyethylene glycol, and the polymer disclosed in JP2016-023254A which is composed of a polyester and a polyethylene glycol.

The fluorescent brightener is a compound which enhances the whiteness and blueness of a molded article by a fluorescent action of absorbing ultraviolet rays of solar light and artificial light, converting the absorbed ultraviolet rays into visible light of purple to blue, and radiating the visible light. Examples of the fluorescent brightener include C.I.

Fluorescent Brightener 184, which is a benzoxazole-based compound; C.I. Fluorescent Brightener 52, which is a coumarin-based compound; and C.I. Fluorescent Brighteners 24, 85 and 71, which are diaminostilbene disulfonic acid-based compounds.

The pigment is not particularly limited, and any commercially available pigment can be used. Specific examples of the pigment include PIGMENT RED 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; PIGMENT ORANGE 13, 31, 34, 36, 38, 43, 46, 48, 49, 51, 52, 55, 59, 60, 61, 62, 64, 65, and 71; PIGMENT YELLOW 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; PIGMENT GREEN 7, 10, and 36; PIGMENT BLUE 15, 15:1, 15:2, 15:3, 15:4, 15:5, 15:6, 22, 24, 29, 56, 60, 61, 62, and 64; PIGMENT VIOLET 1, 15, 19, 23, 27, 29, 30, 32, 37, 40, and 50; and PIGMENT BLACK 7 and 11.

Examples of the dye include azo dyes, anthraquinone dyes, indigoid dyes, triarylmethane dyes, xanthene dyes, alizarin dyes, acridine dyes, stilbene dyes, thiazole dyes, naphthol dyes, quinoline dyes, nitro dyes, indamine dyes, oxazine dyes, phthalocyanine dyes, and cyanine dyes.

The additive composition according to the present embodiment may be, for example, a powder obtained by mixing the above-described components (A), (B), and (C) along with, as required, the above-described component (D) and various additives. Alternatively, the additive composition according to the present embodiment may be a one-pack composite additive obtained by further incorporating a granulation aid such as a binder, a wax, a solvent, or silica, and subsequently granulating the resultant. The additive composition according to the present embodiment may also be a masterbatch further containing a polyolefin-based resin.

Examples of the polyolefin-based resin contained in the masterbatch include: polyethylene-based resins, such as low-density polyethylenes, linear low-density polyethylenes, high-density polyethylenes, cross-linked polyethylenes, and ultrahigh-molecular-weight polyethylenes; polypropylene-based resins, such as homopolypropylenes, random copolymer polypropylenes, block copolymer polypropylenes, impact copolymer polypropylenes, high-impact copolymer polypropylenes, and maleic anhydride-modified polypropylenes; $\alpha$-olefin polymers, such as polybutene-1, cycloolefin polymers, poly-3-methyl-1-butenes, poly-3-methyl-1-pentenes, and poly-4-methyl-1-pentenes; and $\alpha$-olefin copolymers, such as ethylene-methyl methacrylate copolymers and ethylene-vinyl acetate copolymers. These polyolefin-based resins may be used singly or in combination of two or more thereof. Further, these polyolefin-based resins may be alloyed as well. Among these polyolefin-based resins, a polypropylene-based resin is particularly preferred as the polyolefin-based resin contained in the masterbatch. The molecular weight, the polymerization degree, the density, the softening point, the insoluble component-to-solvent ratio, the degree of stereoregularity, the presence or absence of a catalyst residue, the type and the blend ratio of each monomer used as a raw material, the type of a catalyst used for polymerization (e.g., a Ziegler catalyst or a metallocene catalyst), and the like of the polyolefin-based resin are not particularly limited and are selected as appropriate.

When the additive composition is a masterbatch containing a polyolefin-based resin, the content of the polyolefin-based resin in the masterbatch may be, for example, 90% by mass or less, and it is preferably 80% by mass or less, more preferably 60% by mass or less. Meanwhile, the content of the polyolefin-based resin in the masterbatch may be, for example, 20% by mass or more.

The additive composition according to the present embodiment can be particularly preferably used as an additive composition for a polyolefin-based resin.

Next, the resin composition will be described.

<Resin Composition>

The resin composition according to the present embodiment contains a polyolefin-based resin and the above-described additive composition.

The resin composition according to the present embodiment can yield a molded article having excellent mechanical properties and excellent color tone.

Examples of the polyolefin-based resin contained in the resin composition according to the present embodiment include the same ones as those exemplified above for the polyolefin-based resin contained in the masterbatch. Thereamong, a polypropylene-based resin is preferred. In this case, the molded article is provided with excellent heat resistance in addition to excellent mechanical properties and excellent color tone.

In the resin composition according to the present embodiment, the content of the additive composition with respect to 100 parts by mass of the polyolefin-based resin may be, for example, 0.001 to 10 parts by mass. When the content of the additive composition with respect to 100 parts by mass of the polyolefin-based resin is 0.001 parts by mass or more, a molded article having superior mechanical properties can be obtained. Further, when the content of the additive composition with respect to 100 parts by mass of the polyolefin-based resin is 10 parts by mass or less, aggregation of the components contained in the additive composition in the polyolefin-based resin can be sufficiently

inhibited. As a result, a reduction in the dispersibility of the components in the polyolefin-based resin is inhibited, so that a molded article having superior mechanical properties can be obtained. In addition, when the content of the additive composition with respect to 100 parts by mass of the polyolefin-based resin is 10 parts by mass or less, the generation of fish eyes in a molded article can be sufficiently inhibited. From the standpoint of further improving the mechanical properties of a molded article, the content of the additive composition with respect to 100 parts by mass of the polyolefin-based resin is preferably not less than 0.01 parts by mass, more preferably not less than 0.02 parts by mass. Further, from the standpoint of more effectively inhibiting the aggregation of the components contained in the additive composition in the polyolefin-based resin, the content of the additive composition with respect to 100 parts by mass of the polyolefin-based resin is preferably 5 parts by mass or less, more preferably 3 parts by mass or less, still more preferably 1 part by mass or less, yet still more preferably 0.5 parts by mass or less, particularly preferably 0.2 parts by mass or less.

The content of talc in the resin composition according to the present embodiment may be, for example, 0.0001 to 10 parts by mass with respect to 100 parts by mass of the polyolefin-based resin, and it is preferably 0.0001 parts by mass or more but less than 1 part by mass with respect to 100 parts by mass of the polyolefin-based resin. In this case, as compared to a case where the content of talc is outside the above-described range, a molded article having superior scratch resistance and lower specific gravity can be obtained. The content of talc in the resin composition is more preferably 0.8 parts by mass or less, still more preferably 0.5 parts by mass or less, yet still more preferably 0.1 parts by mass or less, particularly preferably 0.08 parts by mass or less, with respect to 100 parts by mass of the polyolefin-based resin.

Further, the resin composition according to the present embodiment may be a resin composition containing a polyolefin-based resin, (A) an aromatic phosphate sodium salt represented by the above-described Formula (1), (B) a fatty acid sodium salt, and (C) talc, in which a mass ratio (B)/(A) of the content of the component (B) with respect to the content of the component (A) is 0.1 to 3, and a mass ratio (C)/[(A) + (B) + (C)] of the content of the component (C) with respect to a total content of the components (A), (B), and (C) is 0.2 to 0.8.

The resin composition according to the present embodiment can yield a molded article having excellent mechanical properties and excellent color tone.

In the resin composition according to the present embodiment, the content of the (A) aromatic phosphate sodium salt with respect to 100 parts by mass of the polyolefin-based resin may be, for example, 0.001 to 10 parts by mass. From the standpoint of further improving the mechanical properties of a molded article, the content of the (A) aromatic phosphate sodium salt with respect to 100 parts by mass of the polyolefin-based resin is preferably not less than 0.01 parts by mass, more preferably not less than 0.02 parts by mass. Further, from the standpoint of sufficiently inhibiting aggregation of the (A) aromatic phosphate sodium salt in the polyolefin-based resin, the content of the (A) aromatic phosphate sodium salt with respect to 100 parts by mass of the polyolefin-based resin is preferably 5 parts by mass or less, more preferably 3 parts by mass or less, still more preferably 1 part by mass or less, yet still more preferably 0.5 parts by mass or less, particularly preferably 0.2 parts by mass or less.

In the resin composition according to the present embodiment, the value of (B)/(A) is preferably not less than 0.14, more preferably not less than 0.33, still more preferably not less than 0.6. Further, in the resin composition according to the present embodiment, from the standpoint of obtaining a molded article having superior mechanical properties, the value of (B)/(A) is preferably 2 or less, more preferably 1 or less.

From the standpoint of obtaining a molded article having superior color tone, the value of (C)/[(A) + (B) + (C)] is preferably not less than 0.3, more preferably not less than 0.5. Moreover, from the standpoint of obtaining a molded article having superior mechanical properties, the value of (C)/[(A) + (B) + (C)] is preferably 0.7 or less.

The content of the (B) fatty acid sodium salt with respect to 100 parts by mass of the polyolefin-based resin may be, for example, 0.001 to 10 parts by mass, and the content of the (C) talc with respect to 100 parts by mass of the polyolefin-based resin may be, for example, 0.0001 to 10 parts by mass.

The resin composition according to the present embodiment preferably further contains (D) a hydrotalcite. In this case, a molded article having superior mechanical properties and excellent heat resistance can be obtained.

When the resin composition according to the present embodiment contains the (D) hydrotalcite, a mass ratio (D)/[(A) + (B) + (C)] of the content (parts by mass) of the component (D) with respect to a total content (parts by mass) of the components (A), (B), and (C) may be, for example, 0.01 to 20. From the standpoint of further improving the heat resistance of a molded article, the value of (D)/[(A) + (B) + (C)] is preferably not less than 0.05, more preferably not less than 0.1, still more preferably not less than 0.3, yet still more preferably not less than 0.5. Further, from the standpoint of further improving the mechanical properties and color tone of a molded article, the value of (D)/[(A) + (B) + (C)] is preferably 10 or less, more preferably 5 or less, still more preferably 3 or less, yet still more preferably 2 or less, particularly preferably 1.5 or less.

The content of the (D) hydrotalcite with respect to 100 parts by mass of the polyolefin-based resin may be, for example, 0.001 to 10 parts by mass.

The resin composition according to the present embodiment may further contain, as required, various additives such as a nucleating agent other than the aromatic phosphate sodium salt, a phenolic antioxidant, a phosphorus-based

antioxidant, a sulfur-based antioxidant, other antioxidants, a hindered amine compound, an ultraviolet absorber, a fatty acid metal salt other than the fatty acid sodium salt, a flame retardant, a flame retardant aid, a lubricant, a filler other than talc, an antistatic agent, a fluorescent brightener, a pigment, and a dye. Examples of these various additives include the same ones as those exemplified above as additives that may be contained in the above-described additive composition.

Next, the method of producing a resin composition will be described.

<Method of Producing Resin Composition>

The method of producing a resin composition according to the present embodiment includes the step of blending the above-described additive composition into a polyolefin-based resin.

As described above, the above-described additive composition has excellent powder flowability and is thus excellent in transportability, workability, and measurability. Therefore, the method of producing a resin composition according to the present embodiment enables to efficiently produce a molded article having excellent mechanical properties and excellent color tone with stable quality.

(Preparation Step)

First, the above-described polyolefin-based resin and the above-described additive composition are prepared.

(Blending Step)

Next, the additive composition is blended into the polyolefin-based resin. A blending method is not particularly limited and, for example, a method of adding the polyolefin-based resin, the additive composition and, as required, the above-described various additives, and subsequently mixing these materials using a mixing apparatus such as a Henschel mixer, a mill roll, a Banbury mixer, or a super mixer may be employed. In this process, at least one of the components constituting the additive composition and various additives may be added before or during polymerization of a polyolefin-based resin monomer or oligomer, and the remaining components may be added to the resulting polymer.

A resin composition is produced in the above-described manner. The method of producing a resin composition may further include the melt-kneading step of melt-kneading a mixture obtained by the above-described method using a melt-kneading apparatus, such as a single-screw extruder or a twin-screw extruder. In this step, the melt-kneading temperature may be, for example, 220 to 280°C. Moreover, the method of producing a resin composition may include the granulation step of granulating a kneaded product obtained by the melt-kneading. A granulation method is not particularly limited and, for example, a method using a granulation apparatus such as a pelletizer may be employed. The shape of the resin composition obtained by the granulation is not particularly limited, and the resin composition may be, for example, in a pellet form.

Further, the method of producing a resin composition may be a method that includes the step of blending the above-described components (A), (B), and (C) along with, as required, the above-described component (D) and various additives into a polyolefin-based resin.

Next, the molded article will be described.

<Molded Article>

The molded article according to the present embodiment is obtained by molding the above-described resin composition. The molded article according to the present embodiment has excellent mechanical properties and excellent color tone.

Examples of the molded article according to the present embodiment include injection-molded articles, fibers, flat yarns, biaxially stretched films, uniaxially stretched films, unstretched films, sheets, thermoformed articles, extrusion blow-molded articles, injection blow-molded articles, injection stretch blow-molded articles, profile extrusion-molded articles, and rotationally molded articles, more specifically automotive exterior components, automotive interior components, housings, containers, and pipes. Examples of the automotive exterior components include bumpers, radiator grilles, front grilles, front panels, fenders, pillars, pillar covers, door mirror stay covers, glass run channels, door mirror housings, lamp housings, wheel covers, spoilers, air spoilers, weather-strips, window moldings, belt moldings, sunroofs, front-end modules, door modules, back door modules, and outer plates. Examples of the automotive interior components include instrument panels, door trim panels, pillar trims, door trims, pillar garnishes, package trays, rear trays, console boxes, and air-conditioning ducts. Examples of the housings include housings for home electric appliances, housings for arcade gaming machines, housings for home-use gaming machines, housings for portable gaming machines, housings for cameras, housings for cellular phones, housings for smartphones, housings for electronic devices, housings for

secondary batteries, and housings for safety breakers. Examples of the containers include: tableware; food containers, such as precooked food containers, frozen food containers, microwavable heat-resistant containers, frozen storage containers, retort containers, cups, and frozen dessert cups; bottle containers, such as beverage bottles, infusion bottles, and medical hollow bottles; containers for physicochemical tests, such as beakers and graduated cylinders; chemical containers; medical containers; detergent containers; cosmetic containers; perfume containers; and toner containers. Examples of the pipes include various pipes, such as infrastructure pipes (e.g., water pipes and gas pipes), plant utility pipes, vehicle fuel delivery pipes, and vehicle air intake pipes; various tubes, such as cosmetic/perfume spray tubes, medical tubes, and infusion tubes; various hoses, such as water hoses and vehicle air duct hoses.

A method of molding the molded article according to the present embodiment is not particularly limited, and examples thereof include injection molding, extrusion molding, blow molding, rotational molding, vacuum molding, inflation molding, calender molding, slush molding, dip molding, and thermoform molding.

## EXAMPLES

The present invention will now be described more concretely by way of Examples thereof; however, the present invention is not limited to the following Examples and the like by any means.

### <Preparation of Additive Compositions>

(Examples 1 to 16 and Comparative Examples 1 to 6)

Sodium 2,2'-methylene-bis(4,6-di-*tert*-butylphenyl)phosphate as (A) an aromatic phosphate sodium salt, sodium stearate as (B) a sodium-fatty acid, and a talc having an average particle size of 4.75 μm (manufactured by Hayashi Kasei Co., Ltd., trade name: MICRON WHITE #5000S) as (C) talc were blended at the respective ratios shown in Tables 1 to 3 and mixed for 1 minute using a food blender (BM-RE08, manufactured by Zojirushi Corporation) to obtain additive compositions of Examples 1 to 16 and Comparative Examples 1 to 6. It is noted here that, in Tables 1 to 3, the unit of blended amount is parts by mass.

(Examples 17 to 24)

Sodium 2,2'-methylene-bis(4,6-di-*tert*-butylphenyl)phosphate as (A) an aromatic phosphate sodium salt, sodium stearate as (B) a sodium-fatty acid, a talc having an average particle size of 4.75 μm (manufactured by Hayashi Kasei Co., Ltd., trade name: MICRON WHITE #5000S) as (C) talc, and a hydrotalcite having an average particle size of 0.45 μm (manufactured by Kyowa Chemical Industry Co., Ltd., trade name: DHT-4A) as (D) a hydrotalcite were blended at the respective ratios shown in Table 4 and mixed for 1 minute using a food blender (BM-RE08, manufactured by Zojirushi Corporation) to obtain additive compositions of Examples 17 to 24. It is noted here that, in Table 4, the unit of blended amount is parts by mass.

### <Evaluation of Powder Flowability>

Using the additive compositions of Examples 1 to 24 and Comparative Examples 1 to 6 as samples, each sample was loaded to a flowing surface angle analyzer equipped with a cylindrical vessel having an inner volume of 500 mL (FSA-100S manufactured by Tsutsui Scientific Instruments Co., Ltd.) such that the cylindrical container was half-filled with the sample, and the cylindrical container was subsequently rotated at a rotation speed of 2.0 rpm. When the cylindrical container is rotated, the sample inside the cylindrical container is lifted along the rotating cylindrical container and crumbles from a high position. Once the slope formed by the crumbling sample was in a constant state, the angle formed by the slope of the sample and a horizontal plane was measured and defined as the rotating angle of repose of the sample. The value of the rotating angle of repose measured in this manner was used as an index of the powder flowability of each additive composition. The thus obtained results are shown in Tables 1 to 4.

### <Evaluation of Heat Resistance>

Using the additive compositions of Examples 3 and 17 to 24 as samples, 1 g of each sample was added to a 15-mL glass test tube of 15 mm in diameter and heated using a block bath at 230°C for 30 minutes in the air atmosphere. The yellowness (YI.) of the sample was measured using a spectrocolorimeter (SD3000, manufactured by Nippon Denshoku Industries Co., Ltd.) before and after the heating, and the value of ΔY.I. calculated by the following equation was used as an index of the heat resistance of each additive composition. The thus obtained results are shown in Table 4.

$$\Delta Y.I. = (Y.I.\ after\ heating) - (Y.I.\ before\ heating)$$

<Preparation of Resin Compositions>

A homopolypropylene as a polyolefin-based resin in an amount of 100 parts by mass, which had a melt flow rate of 8 g/10 min as measured at a temperature of 230°C and a load of 2.16 kg in accordance with ISO Standard 1133, 0.1 parts by mass of each additive composition of Examples 1 to 24 and Comparative Examples 1 to 6, 0.05 parts by mass of tetrakis[methylene-3-(3',5'-di-*tert*-butyl-4'-hydroxyphenyl)propionate]methane as a phenolic antioxidant, 0.1 parts by mass of tris(2,4-di-*tert*-butylphenyl)phosphite as a phosphorus-based antioxidant, and 0.05 parts by mass of calcium stearate as a fatty acid metal salt other than a fatty acid sodium salt were added and mixed for 1 minute using a Henschel mixer at a rotation speed of 1,000 rpm, and the resulting mixture was melt-kneaded using a twin-screw extruder (TEX-28V, manufactured by The Japan Steel Works, Ltd.) at an extrusion temperature of 230°C, a screw rotation speed of 150 rpm, and a feed rate of 7.5 kg/h, whereby pellets of each resin composition were obtained.

<Evaluation of Mechanical Property>

The thus obtained pellets of each resin composition were injection-molded using an injection molding machine (EC100-2A, manufactured by Toshiba Machine Co., Ltd.) at an injection temperature of 200°C and a mold temperature of 50°C to prepare an 80 mm × 10 mm × 4 mm test piece for bending test. This test piece was left to stand for 48 hours in an incubator at temperature of 23°C and a humidity of 50% and subsequently taken out of the incubator, after which the flexural modulus FM (MPa) of the test piece was measured in accordance with ISO-178. The thus obtained results are shown in Tables 1 to 4.

<Evaluation of Color Tone (YI.)>

The above-obtained pellets of each resin composition were injection-molded using an injection molding machine (EC100-2A, manufactured by Toshiba Machine Co., Ltd.) at an injection temperature of 200°C and a mold temperature of 50°C to prepare a 60 mm × 60 mm × 2 mm square sheet as a test piece. This test piece was left to stand for 48 hours in an incubator at temperature of 23°C and a humidity of 50% and subsequently taken out of the incubator, after which the yellowness (YI.) of the test piece was measured using a spectrocolorimeter (COLOR-EYE 7000A, manufactured by X-Rite Inc.). The thus obtained results are shown in Tables 1 to 4.

[Table 1]

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| (A) aromatic phosphate sodium salt | 10 | 13.3 | 24 | 25 | 30 | 35 | 40 | 38 | 5 |
| (B) fatty acid sodium salt | 30 | 26.7 | 16 | 15 | 10 | 5 | 0 | 2 | 35 |
| (C) talc | 60 | 60 | 60 | 60 | 60 | 60 | 60 | 60 | 60 |
| (B)/(A) | 3 | 2 | 0.67 | 0.6 | 0.33 | 0.14 | 0 | 0.05 | 7 |
| (C)/[(A) + (B) + (C)] | 0.6 | 0.6 | 0.6 | 0.6 | 0.6 | 0.6 | 0.6 | 0.6 | 0.6 |
| Rotating angle of repose (°) | 46.0 | 44.9 | 46.0 | 47.8 | 48.4 | 47.8 | 50.6 | 50.2 | 40.7 |
| FM (MPa) | 1,930 | 1,960 | 1,950 | 1,990 | 1,980 | 1,970 | 1,960 | 1,970 | 1,790 |
| Y.I. | 7.7 | 7.7 | 7.4 | 7.4 | 7.3 | 7.1 | 7.0 | 7.0 | 7.9 |

[Table 2]

| | Example 7 | Example 8 | Example 9 | Example 10 | Example 11 | Example 12 | Example 13 |
|---|---|---|---|---|---|---|---|
| (A) aromatic phosphate sodium salt | 20 | 72.7 | 48 | 42 | 36 | 30 | 18 |
| (B) fatty acid sodium salt | 60 | 7.3 | 32 | 28 | 24 | 20 | 12 |
| (C) talc | 20 | 20 | 20 | 30 | 40 | 50 | 70 |
| (B)/(A) | 3 | 0.1 | 0.67 | 0.67 | 0.67 | 0.67 | 0.67 |
| (C)/[(A) + (B) + (C)] | 0.2 | 0.2 | 0.2 | 0.3 | 0.4 | 0.5 | 0.7 |
| Rotating angle of repose (°) | 44 | 46.8 | 39.3 | 42.1 | 46.7 | 45.8 | 47.9 |
| FM (MPa) | 1,980 | 2,040 | 2,030 | 2,020 | 2,010 | 1,990 | 1,950 |
| Y.I. | 7.8 | 6.9 | 7.7 | 7.7 | 7.7 | 7.6 | 7.5 |

[Table 3]

| | Example 14 | Example 15 | Example 16 | Comparative Example 4 | Comparative Example 5 | Comparative Example 6 |
|---|---|---|---|---|---|---|
| (A) aromatic phosphate sodium salt | 12 | 5 | 18.2 | 60 | 54 | 6 |
| (B) fatty acid sodium salt | 8 | 15 | 1.8 | 40 | 36 | 4 |
| (C) talc | 80 | 80 | 80 | 0 | 10 | 90 |
| (B)/(A) | 0.67 | 3 | 0.1 | 0.67 | 0.67 | 0.67 |
| (C)/[(A) + (B) + (C)] | 0.8 | 0.8 | 0.8 | 0 | 0.1 | 0.9 |
| Rotating angle of repose (°) | 49 | 40.7 | 44.6 | 48.2 | 43.2 | 49.7 |
| FM (MPa) | 1,900 | 1,830 | 1,900 | 2,010 | 2,030 | 1,770 |
| Y.I. | 7.5 | 7.7 | 7.3 | 8.1 | 8.1 | 7.8 |

[Table 4]

| | Example 3 | Example 17 | Example 18 | Example 19 | Example 20 | Example 21 | Example 22 | Example 23 | Example 24 |
|---|---|---|---|---|---|---|---|---|---|
| (A) aromatic phosphate sodium salt | 24 | 24 | 24 | 24 | 24 | 24 | 24 | 24 | 24 |
| (B) fatty acid sodium salt | 16 | 16 | 16 | 16 | 16 | 16 | 16 | 16 | 16 |
| (C) talc | 60 | 60 | 60 | 60 | 60 | 60 | 60 | 60 | 60 |
| (D) hydrotalcite | 0 | 1 | 5 | 10 | 30 | 50 | 100 | 150 | 200 |
| (B)/(A) | 0.67 | 0.67 | 0.67 | 0.67 | 0.67 | 0.67 | 0.67 | 0.67 | 0.67 |
| (C)/[(A) + (B) + (C)] | 0.6 | 0.6 | 0.6 | 0.6 | 0.6 | 0.6 | 0.6 | 0.6 | 0.6 |
| (D)/[(A) + (B) + (C)] | 0 | 0.01 | 0.05 | 0.1 | 0.3 | 0.5 | 1 | 1.5 | 2 |
| Rotating angle of repose (°) | 46.0 | 45.1 | 47.1 | 48.0 | 47.4 | 46.5 | 45.2 | 46.7 | 42.7 |
| △Y.I. | 19.3 | 19.2 | 13.7 | 11.7 | 10.8 | 10.7 | 9.2 | 8.6 | 7.7 |
| FM (MPa) | 1,950 | 1,960 | 1,960 | 1,960 | 1,940 | 1,940 | 1,900 | 1,870 | 1,840 |
| Y.I. | 7.4 | 7.4 | 7.1 | 7.3 | 7.3 | 7.3 | 7.4 | 7.6 | 7.9 |

From the results shown in Tables 1 to 4, it was found that the additive compositions of Examples 1 to 24 had excellent powder flowability. In addition, it was found that molded articles having excellent mechanical properties and excellent color tone were obtained from the resin compositions of Examples 1 to 24. On the other hand, the additive compositions of Comparative Examples 1 and 2 cannot be said to have sufficient powder flowability, and the molded articles obtained from the resin compositions of Comparative Examples 3 to 6 cannot be said to have sufficiently good mechanical properties or color tone.

From the above, it was confirmed that the additive composition of the present invention has excellent powder flowability and can impart excellent mechanical properties and excellent color tone to a molded article.

## Claims

1. An additive composition, comprising:

    (A) an aromatic phosphate sodium salt represented by the following Formula (1);
    (B) a fatty acid sodium salt; and
    (C) talc,

    wherein

    a mass ratio (B)/(A) of the content of the component (B) with respect to the content of the component (A) is 0.1 to 3, and
    a mass ratio (C)/[(A) + (B) + (C)] of the content of the component (C) with respect to a total content of the components (A), (B), and (C) is 0.2 to 0.8:

    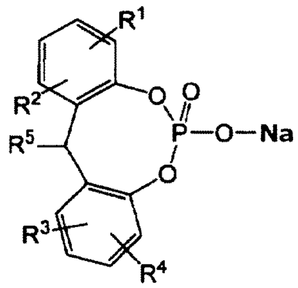

    (1)

    where $R^1$ to $R^5$ each independently represent a hydrogen atom or an alkyl group having 1 to 6 carbon atoms.

2. The additive composition according to claim 1, wherein $R^1$ to $R^4$ are *t*-butyl groups, and $R^5$ is a hydrogen atom.

3. The additive composition according to claim 1 or 2, wherein the (B) fatty acid sodium salt is a fatty acid sodium salt having 12 to 30 carbon atoms.

4. The additive composition according to any one of claims 1 to 3, further comprising (D) a hydrotalcite, wherein a mass ratio (D)/[(A) + (B) + (C)] of the content of the component (D) with respect to a total content of the components (A), (B), and (C) is 0.01 to 20.

5. A resin composition, comprising:

    a polyolefin-based resin; and
    the additive composition according to any one claims 1 to 4.

6. A resin composition, comprising:
    a polyolefin-based resin;

    (A) an aromatic phosphate sodium salt represented by the following Formula (1);
    (B) a fatty acid sodium salt; and
    (C) talc,

    wherein

    a mass ratio (B)/(A) of the content of the component (B) with respect to the content of the component (A) is 0.1 to 3, and
    a mass ratio (C)/[(A) + (B) + (C)] of the content of the component (C) with respect to a total content of the components (A), (B), and (C) is 0.2 to 0.8:

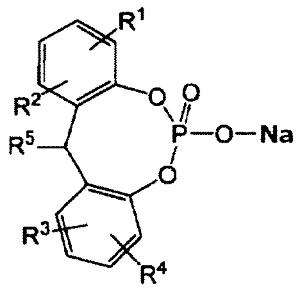

(1)

where $R^1$ to $R^5$ each independently represent a hydrogen atom or an alkyl group having 1 to 6 carbon atoms.

**7.** The resin composition according to claim 6, further comprising (D) a hydrotalcite,
wherein a mass ratio (D)/[(A) + (B) + (C)] of the content of the component (D) with respect to a total content of the components (A), (B), and (C) is 0.01 to 20.

**8.** The resin composition according to any one of claims 5 to 7, wherein the polyolefin-based resin is a polypropylene-based resin.

**9.** A method of producing a resin composition, comprising the step of blending the additive composition according to any one of claims 1 to 4 with a polyolefin-based resin.

**10.** A molded article, obtained by molding the resin composition according to any one of claims 5 to 8.

**INTERNATIONAL SEARCH REPORT**

International application No. **PCT/JP2021/028114**

**A. CLASSIFICATION OF SUBJECT MATTER**

***C08K 5/098***(2006.01)i; ***C08K 5/527***(2006.01)i; ***C08L 23/00***(2006.01)i; ***C08L 23/12***(2006.01)i; ***C08K 3/26***(2006.01)i; ***C08K 3/34***(2006.01)i
FI: C08L23/00; C08K5/527; C08K5/098; C08K3/34; C08K3/26; C08L23/12

According to International Patent Classification (IPC) or to both national classification and IPC

**B. FIELDS SEARCHED**

Minimum documentation searched (classification system followed by classification symbols)

C08L; C08K5; C08K3

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-133364 A (TOKYO PRINTING INK MFG. CO., LTD.) 08 July 2013 (2013-07-08) claims, paragraphs [0012], [0017], [0019], [0020], example 10 | 1-3 |
| Y | JP 2018-168386 A (ADEKA CORP.) 01 November 2018 (2018-11-01) claims, paragraphs [0013], [0037], [0061], [0097], [0161], reference examples, examples | 1-10 |
| X<br>Y | JP 2019-199460 A (ADEKA CORP.) 21 November 2019 (2019-11-21) claims, paragraphs [0025], [0026], [0030], [0031], [0032], [0034] | 1-10<br>1-10 |
| Y | WO 2013/168717 A1 (ADEKA CORP.) 14 November 2013 (2013-11-14) claims, paragraphs [0032], [0034], [0039], [0040], [0044], examples | 1-10 |
| Y | WO 2016/158258 A1 (ADEKA CORP.) 06 October 2016 (2016-10-06) claims, paragraphs [0159], [0168], [0249], [0272], example 1-1 | 1-10 |
| Y | WO 2019/159743 A1 (ADEKA CORP.) 22 August 2019 (2019-08-22) claims, paragraph [0027], example 1 | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 September 2021** | **12 October 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2021/028114**

**C. DOCUMENTS CONSIDERED TO BE RELEVANT**

| Category* | Citation of document, with indication, where appropriate, of the relevant passages | Relevant to claim No. |
|---|---|---|
| Y | JP 5701461 B1 (YUPO CORP.) 15 April 2015 (2015-04-15) claims, paragraph [0040] | 1-10 |
| Y | JP 2009-161700 A (HOKUETSU PAPER MILLS, LTD.) 23 July 2009 (2009-07-23) claims, paragraph [0042] | 1-10 |
| Y | JP 6162878 B1 (TAKAROKU SHOJI CO. LTD.) 12 July 2017 (2017-07-12) claims, paragraph [0027] | 1-10 |
| Y | JP 2007-231185 A (NIPPON ZEON CO., LTD.) 13 September 2007 (2007-09-13) claims, paragraphs [0007], [0043], examples | 1-10 |
| Y | JP 2003-335869 A (TOYO INK CO., LTD.) 28 November 2003 (2003-11-28) paragraph [0002] | 1-10 |
| Y | JP 2010-526898 A (MULTIBASE S. A.) 05 August 2010 (2010-08-05) paragraph [0005] | 1-10 |

Form PCT/ISA/210 (second sheet) (January 2015)

**INTERNATIONAL SEARCH REPORT**
**Information on patent family members**

International application No.
**PCT/JP2021/028114**

| Patent document cited in search report | Publication date (day/month/year) | Patent family member(s) | Publication date (day/month/year) |
|---|---|---|---|
| JP 2013-133364 A | 08 July 2013 | (Family: none) | |
| JP 2018-168386 A | 01 November 2018 | US 2019/0062527 A1<br>claims, paragraphs [0030], [0058], [0120], [0121], [0267], examples<br>EP 3424993 A1<br>TW 201800461 A<br>CN 108699291 A<br>KR 10-2018-0114222 A | |
| JP 2019-199460 A | 21 November 2019 | (Family: none) | |
| WO 2013/168717 A1 | 14 November 2013 | US 2015/0096918 A1<br>claims, paragraphs [0041], [0042], [0044], [0053], [0067], examples<br>EP 2848644 A1<br>CN 104284934 A<br>KR 10-2015-0013760 A<br>TW 201406771 A | |
| WO 2016/158258 A1 | 06 October 2016 | US 2018/0072931 A1<br>claims, paragraphs [0209], [0226], [0330], [0354], example 1-1<br>EP 3279264 A1<br>CN 107429048 A<br>KR 10-2017-0133445 A<br>TW 201702301 A | |
| WO 2019/159743 A1 | 22 August 2019 | US 2021/0047498 A1<br>claims, paragraph [0039], example 1<br>CN 108384053 A<br>TW 201940495 A | |
| JP 5701461 B1 | 15 April 2015 | US 2015/0247017 A1<br>claims, paragraph [0068]<br>WO 2015/132812 A1<br>CN 105102224 A<br>TW 201534472 A | |
| JP 2009-161700 A | 23 July 2009 | (Family: none) | |
| JP 6162878 B1 | 12 July 2017 | (Family: none) | |
| JP 2007-231185 A | 13 September 2007 | (Family: none) | |
| JP 2003-335869 A | 28 November 2003 | (Family: none) | |
| JP 2010-526898 A | 05 August 2010 | US 2010/0234513 A1<br>paragraph [0005]<br>EP 2142593 A1<br>FR 2915749 A1<br>CN 101679673 A<br>KR 10-2010-0016202 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017150662 A
- JP S462280 B
- JP S5030039 B
- JP S5129129 B
- JP H0336839 B
- JP S61174270 A
- JP H05179052 A
- JP 2010132927 A
- JP H0710989 A
- US 6552131 B1
- JP 2016023254 A